# EUROPÄISCHE PATENTSCHRIFT

(11) **EP 1 725 429 B1**
(45) Veröffentlichungstag und Bekanntmachung des Hinweises auf die Patenterteilung: **10.06.2009**
(21) Anmeldenummer: 05715568.1
(22) Anmeldetag: 25.02.2005
(51) Int. Cl.: B60N 2/46, B60N 2/44

(54) **VORRICHTUNG ZUR WINKELVERSTELLUNG EINER UM EINE DREHACHSE DREHBAR VORGESEHENEN KOMPONENTE, INSBESONDERE EINER ARMLEHNE IN EINEM FAHRZEUG**
DEVICE FOR ADJUSTING THE ANGLE OF A COMPONENT THAT CAN BE ROTATED ABOUT A ROTATIONAL AXIS, ESPECIALLY THE ARMREST IN A VEHICLE
DISPOSITIF DE REGLAGE ANGULAIRE D'UN COMPOSANT POUVANT TOURNER AUTOUR D'UN AXE DE ROTATION, EN PARTICULIER UN ACCOUDOIR SITUE DANS UN VEHICULE

(30) Priorität: 05.03.2004 DE 102004011385
(43) Veröffentlichungstag der Anmeldung: 29.11.2006
(73) Patentinhaber: Johnson Controls GmbH, 51399 Burscheid (DE)
(72) Erfinder: OTTO, Jürgen, 51399 Burscheid (DE)
(74) Vertreter: Brosch, Oliver
(86) Internationale Anmeldenummer: PCT/EP2005/002037
(87) Internationale Veröffentlichungsnummer: WO 2005/084999

(56) Entgegenhaltungen:
- DE-A- 19 957 523
- DE-C1- 4 022 840

## Beschreibung

Die Erfindung betrifft eine Vorrichtung zur Winkelverstellung einer um eine Drehachse drehbar vorgesehenen Komponente, insbesondere eine Armlehne, insbesondere befestigt an einem Sitz und insbesondere an oder in einem Fahrzeug. Solche Vorrichtungen sind allgemein bekannt, um verschiedene Funktionen, insbesondere in einem Kraftfahrzeug, auszuführen: zum einen soll die Komponente in einer mehr oder weniger waagerechten Position entsprechend der bequemsten bzw. ergonomischsten Stellung für einen Benutzer leicht verstellbar einstellbar sein; zum anderen soll die Komponente auch in einer mehr oder weniger senkrechten bzw. parallel zur Rückenlehne des Sitzes angeordneten Stellung der Komponente einstellbar sein, so dass beispielsweise seitlich des Sitzes Raum zur Benutzung durch den Benutzer freigehalten und nicht von der Komponente eingenommen wird; weiterhin sollen die eingestellten Positionen möglichst sicher gegen nicht gewollte Einstellungsänderungen geschützt sein. Die Begriffe "Komponente" und "Armlehne" werden im folgenden weitgehend synonym benutzt.

Es ist allgemein bekannt, eine mehr oder weniger waagerechte Einstellung der Armlehne dadurch zu realisieren, dass ein Rastmechanismus mit einer Mehrzahl von ineinandergreifenden Zähnen vorgesehen ist, so dass eine gewisse Anzahl von unterschiedlichen diskreten Positionen der Armlehne möglich ist, wie beispielsweise in der Druckschrift DE 40 22 840 C1 bzw. der Druckschrift DE 199 57 523 A1 offenbart ist, woraus eine Armstütze mit einer ortsfest angebrachten und mit einer Verzahnung versehenen Rastplatte hervorgeht bzw. ein Verstellmachanismus für ein Verstellteil mit zwei relativ zueinander verschwerikbaren Schwenkteilen realisiert. Solche Vorrichtungen sollten möglichst klein und kompakt ausgebildet werden, was sich auch das Gewicht und die Herstellkosten reduziert. Zur Bereitstellung der gewünschten Funktionalität - insbesondere das Vorsehen eines Komfortbereichs, in welchem die Armlehne im wesentlichen waagerecht und drehrichtungsabhängig arretiert sein soll, eines zwischen diesem Komfortbereich und einer im wesentlichen senkrechten Einstellung parallel zur Rückenlehne eines Sitzes vorgesehenen Entriegelungsbereichs, in dem die Armlehne im wesentlichen frei beweglich und auch wieder zurück in ihre unterste Position einstellbar sein soll - sind automatisierte Lösungen allgemein bekannt, bei denen insbesondere Steuerkonturen mit beweglichen Elemente derart zusammenwirken, so dass die Funktionalität erreicht wird. Hierbei sind Zwangsführungen bekannt, die den Nachteil aufweisen, dass relativ zueinander bewegte bzw. bewegliche Elemente teilweise "hart" aneinander anstoßen und die empfindlicheren von solchen Elementen dadurch brechen bzw. sich abnutzen können oder sonstwie ihre Funktionalität einbüßen.

Der Erfindung liegt daher die Aufgabe zugrunde, eine Vorrichtung zur Winkelverstellung einer Armlehne derart weiterzubilden, dass die Nachteile des Standes der Technik vermieden werden.

Diese Aufgabe wird erfindungsgemäß durch eine Vorrichtung zur Winkelverstellung einer um eine Drehachse drehbar vorgesehenen Armlehne gelöst, wobei die Vorrichtung eine erste Arretierverzahnung und einen Kipphebel aufweist, wobei der Kipphebel in einer stabilen Arretierposition und in einer stabilen Löseposition einstellbar ist, wobei die Vorrichtung ein zumindest in einer Winkelstellung der Komponente auf die Feder wirkendes drittes Steuerelement aufweist. Hierdurch werden die Nachteile des Standes der Technik vermieden, weil der Kipphebel nicht direkt über das dritte Steuerelement bewegt wird, so dass auch an einer solchen Stelle kein übermäßiger Verschleiß bzw. sogar ein Bruch des Kipphebels erfolgen kann, bzw. diese Ausfälle sehr viel unwahrscheinlicher sind. Hierbei wird bei einer Änderung der Winkelstellung der Komponente eine Kraftwirkung, ausgehend von dem dritten Steuerelement, auf die Feder ausgeübt, wobei diese Kraftwirkung die Verstellung des Kipphebels von seiner Löseposition in seiner Arretierposition bewirkt. Es erfolgt somit keine direkte Kraftübertragung bzw. kein direkter Kontakt zwischen dem dritten Steuerelement und dem Kipphebel.

Bevorzugt ist, dass die Vorrichtung zur Einstellung der Arretierposition und der Löseposition des Kipphebels eine Feder aufweist, insbesondere eine in zwei stabile Lagen einstellbare Schnappfeder. Dies hat den Vorteil, dass der Kipphebel mit sehr einfachen Mitteln in seine stabilen Positionen einstellbar ist. Eine solche Feder, insbesondere eine Schnappfeder bzw. Totpunktfeder, ist im übrigen vergleichsweise leicht und kostengünstig sowie über die gesamte Lebensdauer der Vorrichtung robust und widerstandsfähig.

Weiterhin ist bevorzugt, dass die Vorrichtung eine Steuervorrichtung aufweist, wobei die Steuervorrichtung in Abhängigkeit der Winkelstellung der Armlehne eine drehrichtungsabhängige Arretierbarkeit der Komponente bewirkt. Es ist hierdurch in einfacher Weise möglich, eine Arretierbarkeit der Armlehne lediglich in bestimmten Winkelstellungsbereichen, beispielsweise in einem sogenannten Komfortbereich der Armlehne, der bei mehr oder weniger waagerechter Einstellung der Armlehne vorgesehen ist, zu ermöglichen.

Es ist ferner bevorzugt, dass die erste Arretierverzahnung eine Innenverzahnung ist und der Kipphebel eine eine Außenverzahnung bildende zweite Arretierverzahnung aufweist. Eine solche bevorzugte Vorrichtung kann besonders einfach, kompakt und mit vergleichsweise geringem konstruktivem Aufwand in einer für einen Benutzer der Vorrichtung bzw. der Armlehne sehr komfortablen Weise benutzbar gebaut werden. Zwar wird diese bevorzugte Ausführungsform mit einer Innenverzahnung an der ersten und einer Außenverzahnung an der zweiten Arretierverzahnung im folgenden ausschließlich behandelt, es ist erfindungsgemäß jedoch auch eine umgekehrte Ausbildung, d.h. mit einem innenverzahnten Kipphebel, möglich.

Weiterhin ist bevorzugt, dass die erste Arretierverzahnung eine umlaufende Innenverzahnung ist und dass die Steuervorrichtung außen verzahnt mit der ersten Arretierverzahnung zusammenwirkend angeordnet ist. Hierdurch ist in einfacher Weise eine kostengünstige Herstellung der erfindungsgemäßen Vorrichtung möglich, weil die Innenverzahnung der ersten Arretierverzahnung weitgehend vollständig umlaufend ausgebildet werden kann. Weiterhin wird hierdurch die Montage der erfindungsgemäßen Vorrichtung erleichtert und damit kostengünstiger gestaltet.

Weitere Gegenstände der Erfindung betreffen eine Armlehne und einen Sitz, die eine erfindungsgemäße Vorrichtung aufweisen bzw. dieser zugeordnet sind.

Die Erfindung wird nachfolgend an Hand von in der Zeichnung dargestellten Ausführungsbeispielen näher erläutert.
- Figur 1: zeigt eine schematische Darstellung der verschiedenen Winkeleinstellungsbereiche bzw. Winkelbereiche, die für die Einstellung der Armlehne relevant sind.
- **Figuren 2 bis 7**: zeigen die erfindungsgemäße Vorrichtung in verschiedenen Einstellungen bzw. Winkelstellungen der Armlehne.
- **Figur 8**: zeigt eine Explosionszeichnung der erfindungsgemäßen Vorrichtung.

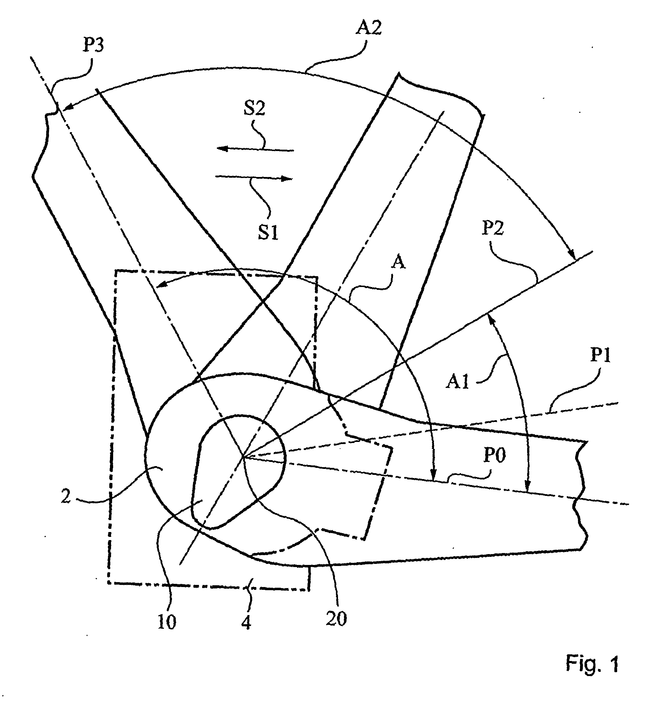

In Figur 1 ist eine um eine Drehachse 20 drehbar angeordnete Armlehne 2 als Beispiel einer Komponente 2 bzw. Fahrzeugkomponente 2 dargestellt. Eine Vorrichtung 10 verbindet die Armlehne 2 mit einem Sitz 4 bzw. mit der Rückenlehne 4 eines Sitzes. Der schematisch dargestellte Sitz 4 kann beispielsweise die Rückenlehne eines Sitzes darstellen oder auch eine andere Vorrichtung, insbesondere als Komponente beispielsweise eines Kraftfahrzeugs. Im folgenden werden die Begriffe "Sitz" 4 und "Rückenlehne" 4 weitgehend synonym geb raucht. Hierbei ermöglicht die Vorrichtung 10 eine Mehrzahl von Einstellungen bzw. Winkelstellungen der Armlehne 2 relativ zur Rückenlehne 4. Der gesamte durch die Vorrichtung 10 bestimmte Schwenkbereich A der Armlehne 2 an der Rückenlehne 4 und um die Drehachse 20 gliedert sich in:
a) einen ersten Winkelbereich A1, der mehr oder weniger einer horizontalen Einstellung der Armlehne 2 entspricht, wenn man davon ausgeht, dass die Rückenlehne 4 im wesentlichen vertikal steht, und
b) einen zweiten Winkelbereich A2, der am "oberen Ende" des Schwenkbereichs A im Anschluss an den ersten Winkelbereich A1 angeordnet ist.

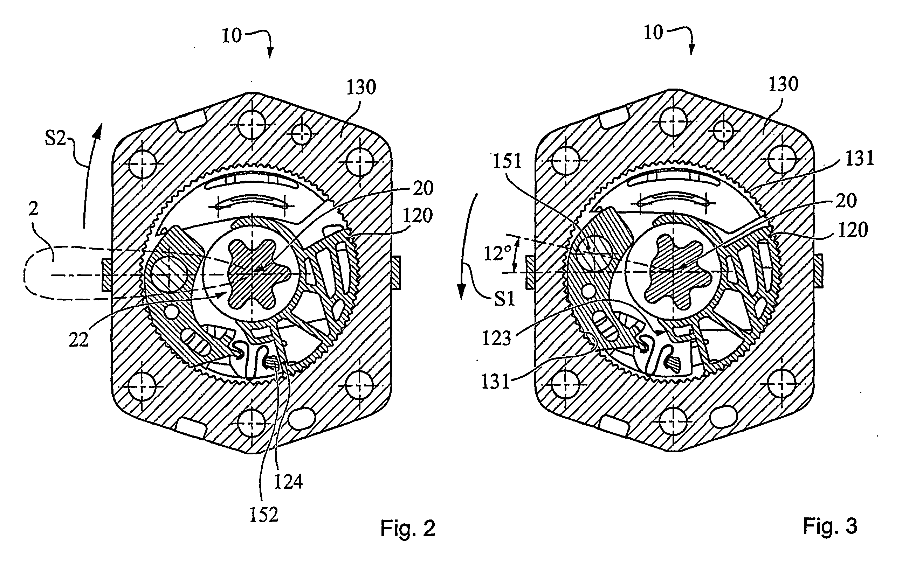

Der erste Winkelbereich A1, der auch als Komfortbereich A1 bezeichnet wird, erstreckt hierbei zwischen einer Extremwinkeistellung P0 und einer die Grenze zwischen dem ersten Winkelbereich A1 und dem zweiten Winkelbereich A2 markierenden zweiten Winkelstellung P2. Eine erste Winkelstellung P1 befindet sich im oder auf dem ersten Winkelbereich A1. Eine weitere Extremwinkelstellung P3 ist am Ende des zweiten Winkelbereichs A2, d. h. an seinem dem ersten Winkelbereich abgewandten Ende, vorgesehen. Der gesamte Schwenkbereich der Armlehne 2 ist in **Figur 1** mit dem Bezugszeichen A markiert. Weiterhin ist eine erste Drehrichtung S1 in **Figur 1** und in allen folgenden Figuren als eine Drehung der Armlehne 2 in Richtung von der weiteren Extremwinkelstellung P3 "nach unten" zur Extremwinkelstellung P0 (dies ist in der Figur 1 im Uhrzeigersinn und in den Figuren 2 bis 7 entgegen dem Uhrzeigersinn) vorgesehen und es ist eine zweite Drehrichtung S2 für eine Drehung der Armlehne 2 entgegen der Richtung der ersten Drehrichtung S1 vorgesehen.

Mit nicht dargestellten Federmitteln kann erfindungsgemäß optional vorgesehen sein, dass die Armlehne 2 zumindest im zweiten Winkelbereich A2 in der ersten Drehrichtung S1 vorgespannt ist, d.h. dass entweder eine größere Kraft erforderlich ist, um die Armlehne 2 zumindest im zweiten Winkelbereich A2 in die zweite Drehrichtung S2 zu bewegen als die Armlehne 2 in die erste Drehrichtung S1 zu bewegen oder aber dass sich die Armlehne 2 selbsttätig in Richtung der ersten Drehrichtung S1 bewegt.

Im folgenden wird nun der Bewegungsablauf und die Funktionsweise der erfindungsgemäßen Vorrichtung 10 bzw. der erfindungsgemäßen Armlehne 2 anhand der **Figuren 2 bis 8** näher erläutert.

In den **Figuren 2 bis 7** sind verschiedene Einstellpositionen bzw. Winkelstellungen der Armlehne 2 zusammen mit der Vorrichtung 10 und ihren verschiedenen Komponenten dargestellt. Hierbei ist in den Figuren 3 bis 7 die Armlehne 2 der Einfachheit halber jeweils nicht eingezeichnet, wobei die Position bzw. Winkelstellung der Armlehne 2 dadurch erkennbar ist, dass eine Achskontur 22 nicht rotationssymmetrisch ist und die Armlehne 2 immer drehfest zur Achskontur 22 angeordnet ist.

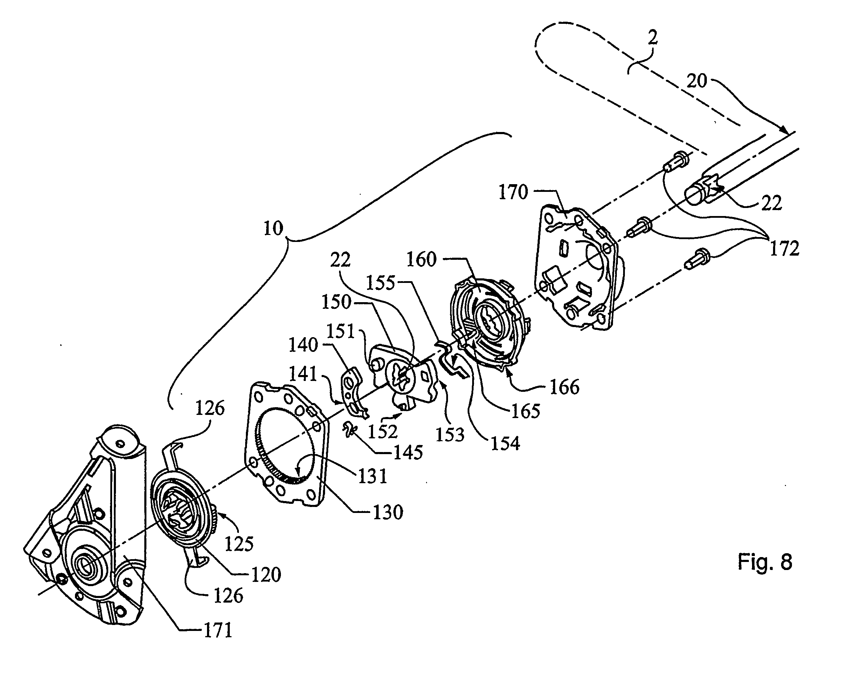

In der **Figur 8** ist eine Explosionszeichnung der erfindungsgemäßen Vorrichtung 10 zusammen mit der Armlehne 2, der Drehachse 20 und einem ersten Gehäuseteil 170 der Vorrichtung 10, einem zweiten Gehäuseteil 171 der Vorrichtung 10 und Montagemitteln 172, insbesondere Schrauben, dargestellt.

Die verschiedenen Komponenten der erfindungsgemäßen Vorrichtung 10 werden nachfolgend gemeinsam für die **Figuren 2 bis 8** eingeführt. Im Inneren der Vorrichtung 10 - wie insbesondere aus der Figur 8 ersichtlich ist - weist die Vorrichtung 10 eine an einem Tragelement 130 angebrachte erste Arretierverzahnung 131 auf, welche als eine vorzugsweise umlaufende bzw. durchgängige Innenverzahnung des Trag- bzw. Halteelements 130 vorgesehen ist.

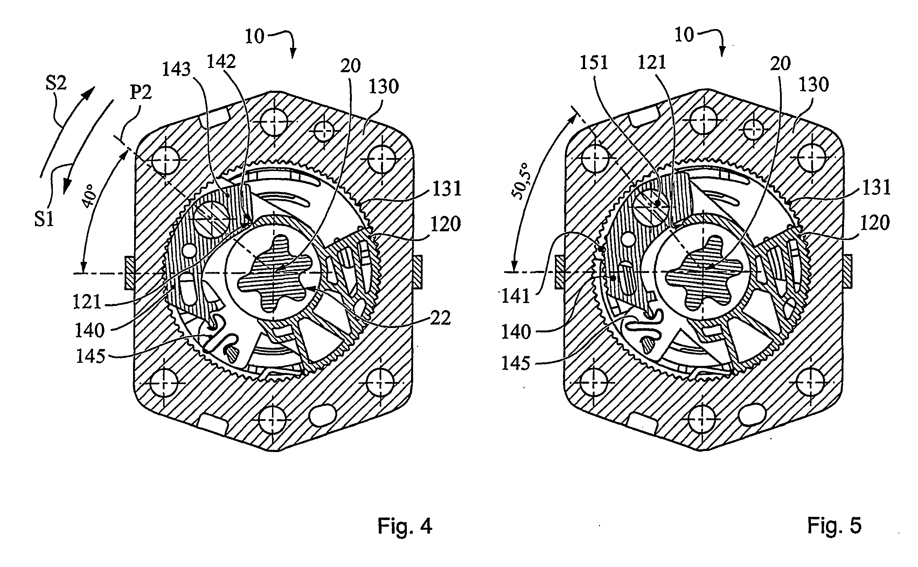

Mit der ersten Arretierverzahnung 131 wirkt eine zweite Arretierverzahnung 141 eines Kipphebels 140 zusammen, wobei der Kipphebel 140 mittels einer nicht mittels eines Bezugszeichens eigens bezeichneten Bohrung bzw. Ausnehmung und mittels eines an einer Drehkomponente 150 befestigten Zapfens 151 drehbar bzw. schwenkbar gelagert ist. Hierbei verläuft der Zapfen 151 bzw. die entsprechende Ausnehmung des Kipphebels 140 parallel zur Drehachse 20, jedoch parallel versetzt zu dieser, d. h. exzentrisch. Die Drehkomponente 150, die auch als Drehelement 150 bezeichnet wird, weist um die Drehachse 20 herum eine Ausnehmung entsprechend der Achskontur 22 auf, so dass nach einem Einstecken der Achskontur 22 in die Drehkomponente 150, die Drehkomponente 150 drehfest mit der Drehachse 20 bzw. mit der Armlehne 2 verbunden ist. Eine Drehung der Armlehne 2 um die Drehachse 20 bewirkt daher eine Drehung des Drehelementes 150, welches den Kipphebel 140 mitnimmt. Der Kipphebel 140 ist mittels einer Feder 145, die insbesondere als Schnappfeder 145, d. h. als Totpunktfeder, ausgebildet ist, mit dem Drehelement 150 verbunden bzw. wirkt mit diesem derart zusammen, dass der Kipphebel 140 in zwei stabilen Positionen, nämlich einer stabilen Arretierposition und einer stabilen Löseposition einstellbar ist. Die stabile Arretierposition des Kipphebels 140 entspricht hierbei der in den Figuren 2 bis 4 dargestellten Position des Kipphebels 140. Die Löseposition des Kipphebels 140 entspricht der in den Figuren 5 bis 7 dargestellten Positionen des Kipphebels 140. In der Arretierposition des Kipphebels 140 ist hierbei die zweite Arretierverzahnung 141 weiter außen (bezüglich der Drehachse 20) angeordnet, und bei der Löseposition des Kipphebels 140 ist die weitere Arretierverzahnung 141 weiter innen, d. h. näher an der Drehachse 20, angeordnet. Der Kipphebel 140 ist in der Ebene des Halteelements 130 angeordnet, d. h. in der Ebene der ersten Arretierverzahnung 131. In dieser Ebene ist ebenfalls zumindest ein Teil einer Steuervorrichtung 120 angeordnet, die in das Tragelement 130 bzw. Haltelement 130, beispielsweise mittels einer Klippverrastung 126 (vgl. Figur 8), arretierbar ist. Hierzu weist die Steuervorrichtung 120 zumindest in einem Teilbereich eine Verzahnung 125 auf, die mit der ersten Arretierverzahnung 131 zumindest in Teilbereichen ihres Umfangs zusammenwirkt und dadurch die Steuervorrichtung 120 mit dem Halteelement 130 (drehfest) verbindet. Selbstverständlich könnte die Steuervorrichtung 120 und das Halteelement 130 auch integriert hergestellt vorgesehen sein.

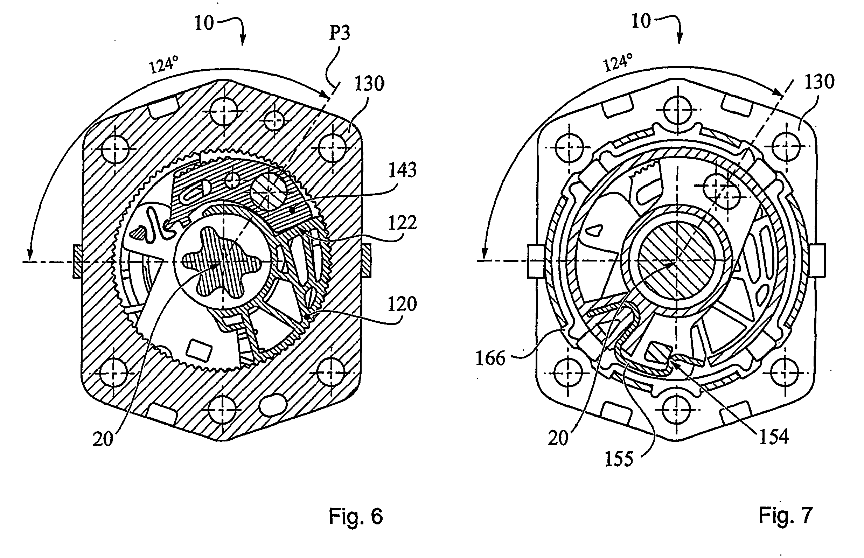

Auf der der Steuervorrichtung 120 gegenüberliegenden Seite des Halteelements 130 ist ein weiteres Halteelement 160 vorgesehen, welches eine Ausnehmung 165 zur Aufnahme eines Teils einer Arretierfeder 155 aufweist, wobei die Arretierfeder ein fünftes Steuerelement 154 aufweist, welches mit einem sechsten Steuerelement 153 der Drehkomponente 150 zusammenwirkt und - wie besonders deutlich aus der Figur 7 hervorgeht - eine Arretierung des Drehelements 150 bewirkt, wenn die Armlehne 2 in ihrer weiteren Extremposition P3 eingestellt ist. Das weitere Halteelement 160 dient mittels Reibelementen 166 auch dazu, der Bewegung der Armlehne 2 um die Drehachse 20 herum einen gewissen Widerstand entgegenzusetzen. Dies ist insofern vorteilhaft, als dass hierdurch eine ungewollte Verstellung der Armlehne 2, beispielsweise hervorgerufen durch Auf- und Abbewegungen des Fahrzeugs, etwa bei Bodenwellen, verhindert wird. Alternativ zu den Reibelementen 166 kann es auch vorgesehen sein, dass die Armlehne 2 mittels nicht dargestellter Federmittel in Richtung auf die Extremposition P0 hin vorgespannt ist.

Die Gehäuseelemente 171, 170, 172 sind in den Figuren 2 bis 7 der Einfachheit halber nicht dargestellt.

Im folgenden wird nun der Bewegungsablauf und die Funktionsweise der erfindungsgemäßen Vorrichtung bzw. der erfindungsgemäßen Armlehne 2 anhand der Figuren 2 bis 7 näher erläutert.

**In** **Figur 2** soll angenommen werden, dass sich die Armlehne 2 im wesentlichen in ihrer in Figur 1 dargestellten Extremwinkelstellung P0 befindet. Der Kipphebel 140 ist bei der Extremwinkeistellung P0 in seiner Arretie rposition eingestellt. Hierdurch kommt es zum Eingriff zwischen der ersten Arretierverzahnung 131 (des Tragelements 130) und der zweiten Arretienrerzahnung 141 des Kipphebels 140. Die Armlehne 2 ist in dieser Position drehrichtungsabhängig arretiert. Dies bedeutet, dass die Armlehne 2 zwar nach oben, d. h. in die zweite Drehrichtung S2 (gegen eine gewisse Kraftwirkung) bewegt werden kann , dass jedoch die Armlehne 2 gegenüber einer Bewegung in Richtung der ersten Drehrichtung S1 vollständig arretiert ist. Wird die Armlehne 2 in Richtung der zweiten Drehrichtung S2, d. h. "nach oben", bewegt, wird der Eingriff der Arretierverzahnungen 131, 141 zunächst aufgehoben. Diese schnappen dann jedoch unter der Wirkung der Feder 145, die den Kipphebel 140 in Richtung auf seine Arretierposition hin vorspannt, wieder ein, so dass die Arretierverzahnungen 131, 141 - um wenigstens einen Zahn verschoben - wieder in Eingriff gelangen. Auf diese Weise ist es möglich, die Armlehne 2 entsprechend der von den Arretierverzahnungen 131, 141 vorgegebenen diskreten Rastpositionen im Komfortbereich, d. h. zwischen der Extremwinkelstellung P0 und einer um etwa 40 Grad nach oben, d. h. in Richtung der zweiten Drehrichtung S2 eingestellten Armlehne 2 drehrichtungsabhängig, arretierbar ist, d. h. die Armlehne 2 kann zwar nach oben bewegt werden, nicht jedoch nach unten.

**In** **Figur 4** ist die Armlehne 2 in der zweiten Winkelstellung eingestellt, bei der ein Bereich 142 der der zweiten Arretierverzahnung 141 gegenüberliegenden Seite 143 des als zweiseitiger Hebel ausgebildeten Kipphebels 140 durch ein erstes Steuerelement 121 der Steuervorrichtung 120 derart bewegt, dass der Kipphebel 140 von seiner Arretierposition in seine Löseposition umschwenkt, was in Figur 5 dargestellt ist.

**In** **Figur 5** ist die Armlehne 2 um ca. 50,5 Grad gegenüber ihrer Extremwinkelstellung P0 nach oben, d. h. in die zweite Richtung S2, bewegt. In dieser Position der Armlehne 2 ist der Kipphebel 140 sicher in seine Löseposition eingestellt, d. h. das erste Steuerelement 121 der Steuervorrichtung 120 hat die der zweiten Arretierverzahnung 141 gegenüberliegende Seite 143 des Kipphebels 140 nach außen, d. h. von der Drehachse 20 weg, gedrückt, so dass die andere Seite des Kipphebels 140, an der die zweite Arretierverzahnung 141 angeordnet ist, nach innen, d. h. zur Drehachse 20 hin, gedrückt wird, wobei die Feder 145 in eine zweite Einschnappposition, die der Löseposition des Kipphebels 140 entspricht, bewegt wird.

Wird die Armlehne 2, wie in **Figur 6** dargestellt, weiter gedreht, erreicht sie einen Endanschlag bei der weiteren Extremwinkelstellung P3, beispielsweise 124 Grad von der Extremwinkelstellung P0 gedreht. Hierbei stößt das der zweiten Arretierverzahnung 141 entgegengesetzte Ende 143 des Kipphebels 140 an einem zweiten Steuerelement 122 der Steuervorrichtung 120 an. Das zweite Steuerelement 122 ist insbesondere als gerader Anschlag für das Ende 143 des Kipphebels 140 ausgebildet. Zwischen der zweiten Winkelstellung P2 und der weiteren Extremwinkelstellung P3 ist die Armlehne 2 im wesentlich frei drehbar, wobei diese freie Drehbarkeit gegebenenfalls durch in der Figur 8 und in der Figur 7 erkennbare Bremselemente 166 und/oder durch eine nicht dargestellte Federvorspannung in Richtung der Extremwinkelstellung P0 der Armlehne, 2 eingeschränkt ist.

**In** **Figur 7** ist noch die Halteklammer 155 zusammen mit dem fünften Steuerelement 154 dargestellt.

Wenn die Armlehne 2 wieder zurück gedreht wird in Richtung auf die Extremwinkelstellung P0 hin, erreicht der in seine Löseposition eingestellte Kipphebel 140 bei ca. 12 Grad Verdrehung (gegenüber der Extremwinkelstellung P0 nach oben) einen Punkt bzw. eine Position, an welcher ein in der Figur 3 dargestelltes drittes Steuerelement 123 der Steuervorrichtung 120 auf die Feder 145 wirkt und diese dazu bringt, den Kipphebel 140 von seiner Löseposition in seine Arretierposition einzustellen. Ein viertes Steuerelement 124 der Steuervorrichtung 120 ist in der Figur 2 dargestellt. Seine Wirkung ist, in der Extremwinkelstellung P0 einen Anschlag für die Drehkomponente 150 bzw. ein an der Drehkomponente 150 befestigtes Anschlagelement 152 zu bilden. Nachdem der Eingriff zwischen der ersten Arretierverzahnung 131 und der zweiten Arretierverzahnung 141 in der Extremwinkelstellung P0 durch die Wirkung des dritten Steuerelements 123 hergestellt ist, ist die Armlehne 2 wiederum drehrichtungsabhängig arretiert und kann im Komfortbereich zwischen der Extremwinkeistellung P0 und der zweiten Winkelstellung P2 eingestellt werden. Es ist hierdurch erfindungsgemäß möglich, dass die Armlehne 2 ohne zusätzliche Tasten, mithin automatisch, in ihrem Komfortbereich, der dem ersten Winkelbereich A1 entspricht, drehrichtungsabhängig arretiert ist und ebenfalls automatisch entriegelt wird, wenn die Armlehne 2 über diesen Komfortbereich hinaus in den zweiten Winkelbereich A2 hin eingestellt wird. Erfindungsgemäß ist es nicht unbedingt erforderlich, die Armlehne bis zu ihrem oberen Anschlag, d. h. bis zu ihrer weiteren Extremwinkelstellung P3 hin einzustellen, um eine Endriegelung bzw. die Einstellung der Löseposition des Kipphebels 140, zu bewirken. Besonders vorteilhaft ist, dass beim Übergang des Kipphebels 140 von seiner Löseposition in seine Arretierposition keine Steuerkontur mit dem Kipphebel 140 bzw. mit einem anderen Betätigungselement "hart" zusammenwirkt, so dass die Wahrscheinlichkeit von Brüchen bzw. von Materialverschleiß, insbesondere bei dynamischen Einflüssen, weitgehend vermieden wird. Erfindungsgemäß ist es jedoch auch möglich, dass die Einstellung des Kipphebels 140 von seiner Löseposition in seiner Arretierposition dadurch erfolgt, dass das dritte Steuerelement 123 nicht lediglich mit der Feder 145 zusammenwirkt, sondern direkt mit dem Kipphebel 140 zusammenwirkt.

Es ist klar, dass erfindungsgemäß vorgesehen ist, dass die Feder 145 eine ausreichend große Kraft auf den Kipphebel ausübt, so dass einerseits in Verbindung mit der Geometrie des Kipphebels 140 eine bistabile Lage des Kipphebels 140 bewirkt wird und dass andererseits aber auch bei der Ratschenfunktion im Komfortbereich A1 eine genügend hohe Anpresskraft an die Zähne der ersten und zweiten Arretierverzahnung 131, 141 gewährleistet ist.

### Bezugszeichenliste

- 2: Armlehne
- 4: Sitz/Rückenlehne
- 10: Vorrichtung
- 20: Drehachse
- 22: Achskontur
- 120: Steuervorrichtung
- 121: erstes Steuerelement
- 122: zweites Steuerelement
- 123: drittes Steuerelement
- 124: viertes Steuerelement
- 125: Verzahnung
- 126: Klippverrastung
- 130: Tragelement
- 131: erste Arretierverzahnung
- 140: Kipphebel
- 141: zweite Arretierverzahnung
- 143: Seite/Ende des Kipphebels
- 145: Feder
- 150: Drehkomponente/Drehelement
- 151: Zapfen
- 152: Anschlagelement
- 153: sechstes Steuerelement
- 154: fünftes Steuerelement
- 155: Halteklammer
- 160: weiteres Halteelement
- 165: Ausnehmung
- 166: Reibelement/Bremselement
- 170: erstes Gehäuseteil
- 171: zweites Gehäuseteil
- 172: Montagemitteln
- A: Schwenkbereich
- A1: erster Winkelbereich
- A2: zweiter Winkelbereich
- P0: Extremwinkelstellung
- P1: erste Winkelstellung
- P2: zweite Winkelstellung
- P3: weitere Extremwinkelstellung
- S1: erste Drehrichtung
- S2: zweite Drehrichtung

## Patentansprüche

1. Vorrichtung (10) zur Winkelverstellung einer um eine Drehachse (20) drehbar vorgesehenen Komponente (2), insbesondere eine Armlehne, insbesondere befestigt an einem Sitz (4) und insbesondere an oder in einem Fahrzeug, wobei die Vorrichtung (10) eine erste Arretierverzahnung (131) und einen Kipphebel (140) aufweist, wobei der Kipphebel (140) in einer stabilen Arretierposition und in einer stabilen Löseposition einstellbar ist, wobei die Vorrichtung (10) zur Einstellung der Arretierposition und der Löseposition des Kipphebels (140) eine Feder (145) aufweist, wobei die Vorrichtung (10) eine Steuervorrichtung (120) aufweist, wobei die Vorrichtung (10) ein zumindest in einer Winkelstellung der Komponente (2) auf die Feder (145) wirkendes drittes Steuerelement (123) der vier Steuerelemente (121, 122, 123, 124) aufweisenden Steuervorrichtung (120) aufweist,
**dadurch gekennzeichnet, dass** die erste Arretierverzahnung (131) eine umlaufende Innenverzahnung ist und wobei die Steuervorrichtung (120) außenverzahnt (125) mit der ersten Arretierverzahnung (131) zusammenwirkend angeordnet ist.

2. Vorrichtung (10) nach Anspruch 1, **dadurch gekennzeichnet, dass** die Feder (145) eine in zwei stabile Lagen einstellbare Schnappfeder (145) ist.

3. Vorrichtung (10) nach einem der vorhergehenden Ansprüche, **dadurch gekennzeichnet, dass** die Steuervorrichtung (120) in Abhängigkeit der Winkelstellung der Komponente (2) eine drehrichtungsabhängige Arretierbarkeit der Komponente (2) bewirkt.

4. Vorrichtung (10) nach einem der vorhergehenden Ansprüche, **dadurch gekennzeichnet, dass** die erste Arretierverzahnung (131) eine Innenverzahnung ist und der Kipphebel (140) eine eine Außenverzahnung bildende zweite Arretierverzahnung (141) aufweist,

5. Komponente (2), insbesondere Armlehne, **dadurch gekennzeichnet, dass** die Komponente (2) eine Vorrichtung (10) nach einem der vorhergehenden Ansprüche zugeordnet ist oder die Komponente (2) eine Vorrichtung (10) nach einem der vorhergehenden Ansprüche umfasst.

6. Sitz (4), insbesondere Fahrzeugsitz, **dadurch gekennzeichnet, dass** der Sitz (4) eine Vorrichtung (10) nach einem der Ansprüche 1 bis 5 umfasst.

## Claims

1. Device (10) for adjusting the angle of a component (2) that can be rotated about a rotational axis (20), especially an arm rest, in particular fastened to a seat (4) and in particular to or in a vehicle, the device (10) having a first locking toothing (131) and a rocking lever (140), the rocking lever (140) being able to be set in a stable locking position and in a stable release position, the device (10) for setting the locking position and the release position of the rocking lever (140) having a spring (145), the device (10) having a control device (120), and the device (10) having a third control element (123) which acts on the spring (145) at least in one angular position of the component (2) and belongs to the control device (120) having four control elements (121, 122, 123, 124), **characterized in that** the first locking toothing (131) is a peripheral internal toothing, and the control device (120), externally toothed (125), being arranged such that it interacts with the first locking toothing (131).

2. Device (10) according to Claim 1, **characterized in that** the spring (145) is a snap-action spring (145) which can be set into two stable positions.

3. Device (10) according to one of the preceding claims, **characterized in that** the control device (120) brings about a direction-of-rotation-dependent lockability of the component (2) as a function of the angular position of the component (2).

4. Device (10) according to one of the preceding claims, **characterized in that** the first locking toothing (131) is an internal toothing and the rocking lever (140) has a second locking toothing (141) forming an external toothing.

5. Component (2), in particular arm rest, **characterized in that** the component (2) is assigned to a device (10) according to one of the preceding claims, or **in that** the component (2) comprises a device (10) according to one of the preceding claims.

6. Seat (4), in particular vehicle seat, **characterized in that** the seat (4) comprises a device (10) according to one of Claims 1 to 5.

## Revendications

1. Dispositif (10) de réglage angulaire d'un composant (2) pouvant tourner autour d'un axe de rotation (20), en particulier un accoudoir, en particulier fixé sur un siège (4) et en particulier sur ou dans un véhicule, le dispositif (10) présentant une première denture de blocage (131) et un levier basculant (140), le levier basculant (140) pouvant être ajusté dans une position de blocage stable et dans une position de libération stable, le dispositif (10) présentant un ressort (145) pour l'ajustement dans la position de blocage et dans la position de libération du levier basculant (140), le dispositif (10) présentant un dispositif de commande (120), le dispositif (10) présentant un troisième élément de commande (123) du dispositif de commande (120) présentant quatre éléments de commande (121, 122, 123, 124), le troisième élément agissant au moins dans une position angulaire du composant (2) sur le ressort (145), **caractérisé en ce que** la première denture de blocage (131) est une denture interne périphérique, le dispositif de commande (120) ayant une denture extérieure (125) de manière à coopérer avec la première denture de blocage (131).

2. Dispositif (10) selon la revendication 1, **caractérisé en ce que** le ressort (145) est un ressort d'encliquetage (145) pouvant être ajusté dans deux positions stables.

3. Dispositif (10) selon l'une quelconque des revendications précédentes, **caractérisé en ce que** le dispositif de commande (120) provoque, en fonction de la position angulaire du composant (2), une possibilité de blocage du composant (2) en fonction du sens de rotation.

4. Dispositif (10) selon l'une quelconque des revendications précédentes, **caractérisé en ce que** la première denture de blocage (131) est une denture interne et le levier basculant (140) présente une deuxième denture de blocage (141) formant une denture extérieure.

5. Composant (2), en particulier dossier, **caractérisé en ce que** le composant (2) est associé à un dispositif (10) selon l'une quelconque des revendications précédentes, ou le composant (2) comprend un dispositif (10) selon l'une quelconque des revendications précédentes.

6. Siège (4), en particulier siège de véhicule, **caractérisé en ce que** le siège (4) comprend un dispositif (10) selon l'une quelconque des revendications 1 à 5.
